(19) Europäisches Patentamt / European Patent Office / Office européen des brevets

(11) **EP 3 696 828 B1**

(12) **EUROPEAN PATENT SPECIFICATION**

(45) Date of publication and mention of the grant of the patent:
**22.01.2025 Bulletin 2025/04**

(21) Application number: **18876042.5**

(22) Date of filing: **12.11.2018**

(51) International Patent Classification (IPC):
**H01F 1/113** *(2006.01)*      **C01G 49/00** *(2006.01)*

(52) Cooperative Patent Classification (CPC):
**H01F 1/11; C01G 49/00; H01F 1/113**

(86) International application number:
**PCT/JP2018/041785**

(87) International publication number:
**WO 2019/093508 (16.05.2019 Gazette 2019/20)**

(54) **METHOD FOR PRODUCING FERRITE POWDER FOR BONDED MAGNETS**

VERFAHREN ZUR HERSTELLUNG VON FERRITPULVER FÜR VERBUNDMAGNETE

PROCÉDÉ DE PRODUCTION DE POUDRE DE FERRITE POUR DES AIMANTS LIÉS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **13.11.2017   JP 2017217946**
**28.09.2018   JP 2018184745**
**09.11.2018   JP 2018211594**

(43) Date of publication of application:
**19.08.2020 Bulletin 2020/34**

(73) Proprietors:
• **Dowa Electronics Materials Co., Ltd.**
**Chiyoda-ku**
**Tokyo 101-0021 (JP)**
• **Dowa F-tec Co., Ltd.**
**Kume-gun, Okayama 708-1523 (JP)**

(72) Inventors:
• **YAMADA Tomoya**
**Kume-gun**
**Okayama 708-1523 (JP)**

• **TSUBOI Satoru**
**Kume-gun**
**Okayama 708-1523 (JP)**
• **UEMURA Kazuyuki**
**Kume-gun**
**Okayama 708-1523 (JP)**
• **BABA Takuyuki**
**Kume-gun**
**Okayama 708-1523 (JP)**
• **MISHIMA Yasunobu**
**Kume-gun**
**Okayama 708-1523 (JP)**

(74) Representative: **Manitz Finsterwald**
**Patent- und Rechtsanwaltspartnerschaft mbB**
**Martin-Greif-Strasse 1**
**80336 München (DE)**

(56) References cited:
EP-A1- 1 365 424         EP-A1- 3 203 484
EP-A1- 3 264 430         EP-B1- 1 365 424
WO-A1-2016/136701      JP-A- 2004 186 224
JP-A- 2004 327 669      JP-A- 2016 157 939

**Description**

Technical Field

The present invention relates generally to a method for producing a ferrite powder for bonded magnet. More specifically, the invention relates to a method for producing a ferrite powder for bonded magnet, which contains coarse and fine particles of a ferrite.

Background Art

As magnets having strong magnetic force, such as magnets used for small motors for use in audio visual equipment, office automation equipment, automotive electric components and so forth, and magnets used for magnet rolls of copying machines and so forth, ferritic sintered magnets are conventionally used. However, in ferritic sintered magnets, there is a problem in that it is difficult to process them in complicated shapes, in addition to the problems in that the productivity thereof is bad since they may be broken and since it is required to polish them.

For that reason, in recent years, as magnets having strong magnetic force, such as magnets used for small motors for use in office automation equipment, audio visual equipment, automotive electric components and so forth, bonded magnets of rare earth magnets are used. However, there are problems in that the costs of rare earth magnets are higher than about twenty times as high as the costs of ferrite sintered magnets and that rare earth magnets are easy to rust off, so that it is desired to use ferrite bonded magnets in place of ferrite sintered magnets.

However, the density of a bonded magnet is quite different from that of a sintered magnet. For example, the density of a ferrite sintered magnet is about 5.0 $g/cm^3$. On the other hand, the density of a ferrite bonded magnet is lower than that of the ferrite sintered magnet to lower the magnetic force thereof, since the ferrite bonded magnet contains a binder such as a resin and a rubber. For that reason, it is required to increase the percentage content of a ferrite powder in the ferrite bonded magnet in order to enhance the magnetic force thereof. However, if the percentage content of the ferrite powder in the ferrite bonded magnet is increased, the viscosity of the kneaded material of the ferrite powder and a binder during the kneading thereof is enhanced to increase the load during the kneading thereof to deteriorate the productivity thereof. In an extreme case, it is not possible to knead them. Even if it is possible to knead them, the fluidability of the kneaded material is deteriorated during molding, so that the productivity thereof is lowered. In an extreme case, it is not possible to mold the kneaded material .

In order to solve such problems of the ferrite bonded materials, it is important to enhance the compactability (repletion) of the ferrite powder. The compactability of the ferrite powder is generally highly related to the particle size distribution and compression density thereof, so that it is required to enhance the compression density of the ferrite powder in order to the compactability thereof.

As a method for producing such a ferrite powder for bonded magnet, the ferrite powder having a high compression density and high compactability, there is proposed a method for producing a ferrite powder for bonded magnet, the method comprising the steps of: firing a first granulated substance, which is obtained by granulating a plurality of ferrite raw materials containing iron oxide, at a temperature of not lower than 1180 °C and lower than 1220 °C to obtain coarse particles of a fired substance; firing a second granulated substance, which is obtained by granulating a plurality of ferrite raw materials containing oxides, at a temperature of not lower than 900 °C and not higher than 1000 °C to obtain fine particles of a fired substance; obtaining a mixed powder by mixing the coarse particles with the fine particles in such a mixing ratio that the ratio of the weight of the coarse particles to the total weight of the coarse particles and fine particles of the fired substance is not lower than 65 % by weight and lower than 75 % by weight; obtaining a mixed pulverized substance by applying mechanically pulverizing force to the mixed powder; and annealing the mixed pulverized substance (see, Patent Document 1).

Further methods for producing a ferrite powder for a bonded magnet are also known from Patent Documents 2 and 3.

Prior Art Document(s)

Patent Document(s)

Patent Document 1: Japanese Patent Laid-Open No. 2016-72636 (Paragraph Number 0014)
Patent Document 2: International Application No. 2016/136701
Patent Document 3: Japanese Patent Laid-Open No. 2016-157939

EP 3 696 828 B1

Summary of the Invention

Problem to be solved by the Invention

In recent years, in association with high-performance (such as complicated shapes and multi-magnetic fields) of motors, it is desired to provide a bonded magnet having a high coercivity iHc (of not less than 4000 Oe (1 Oe = 79.5775 A/m)) and a high residual magnetization Br (of not less than 2800 G (1 G = $10^{-4}$ T)) in order to suppress the demagnetization to a diamagnetic field. In order to obtain such a bonded magnet having a high coercivity, it is required to enhance the coercivity (coercive force) of a ferrite powder for bonded magnet. In order to thus enhance the coercivity of the ferrite powder for bonded magnet, it is required to decrease the particle diameters of coarse particles for use in a ferrite powder for bonded magnet, which is produced by mixing a coarse powder with a fine ferrite powder.

However, in conventional ferrite powders for bonded magnet, such as the ferrite powder for bonded magnet disclosed in Patent Document 1, there is a problem in that, if the particle diameters of the coarse powder are decreased, it is difficult to fill the mixed ferrite powder, so that the compression density thereof is lowered. If the ferrite powder for bonded magnet, the compression density of which is thus lowered, is used for producing a bonded magnet, the residual magnetization Br thereof is lowered. For that reason, it is not possible to obtain a bonded magnet having a high coercivity iHc and a high residual magnetization Br by using the conventional ferrite powders for bonded magnet.

It is therefore an object of the present invention to eliminate the aforementioned conventional problems and to provide a method for producing a ferrite powder for bonded magnet, which can obtain a bonded magnet having a high coercivity iHc and a high residual magnetization Br.

Means for solving the Problem

The object is solved by a method according to claim 1.

In particular, to accomplish the aforementioned object, the inventors have diligently studied and found that it is possible to produce a ferrite powder for bonded magnet, which can obtain a bonded magnet having a high coercivity iHc and a high residual magnetization Br, by a method for producing a ferrite powder for bonded magnet, the method comprising the steps of: mixing a complex oxide of iron and strontium, iron oxide, and a flux to obtain a mixture; granulating the mixture to obtain a granulated mixture; firing the granulated mixture to obtain a fired substance; coarsely pulverizing the fired substance to obtain a coarse ferrite powder; mixing the coarse ferrite powder with a fine ferrite powder having a larger specific surface area than that of the coarse ferrite powder to obtain a mixed ferrite powder; and annealing the mixed ferrite powder. Thus, the inventors have made the present invention.

According to the present invention, there is provided a method for producing a ferrite powder for bonded magnet, the method comprising the steps of: mixing a complex oxide of iron and strontium, iron oxide, and a flux to obtain a mixture; granulating the mixture to obtain a granulated mixture; firing the granulated mixture to obtain a fired substance; coarsely pulverizing the fired substance to obtain a coarse ferrite powder; mixing the coarse ferrite powder with a fine ferrite powder having a larger specific surface area than that of the coarse ferrite powder to obtain a mixed ferrite powder; and annealing the mixed ferrite powder.

In this method for producing a ferrite powder for bonded magnet, the complex oxide is preferably produced by firing a granulated substance which is obtained by mixing and granulating $\alpha$-Fe$_2$O$_3$ and strontium carbonate so that a molar ratio (Fe/Sr) of Fe to Sr is in the range of from 0.5 to 2.5. The average value of ratios is preferably 1.60 or less, each of the ratios being a ratio (length of major axis / length of minor axis) of a length of a major axis of a corresponding one of particles of the ferrite powder for bonded magnet to a length of a minor axis of the corresponding one of the particles, the length of the major axis of the corresponding one of the particles being 1.0 $\mu$m or more. The average value of ratios is preferably 1.60 or less, each of the ratios being a ratio (length of major axis / length of minor axis) of a length of a major axis of a corresponding one of particles of the ferrite powder for bonded magnet to a length of a minor axis of the corresponding one of the particles, the length of the major axis of the corresponding one of the particles being 0.5 $\mu$m or more.

Using the method of the invention, a ferrite powder for bonded magnet may be obtained, wherein an average particle diameter obtained by an air transmission method is in the range of from 1.00 $\mu$m to 1.24 $\mu$m and wherein an average value of ratios is not greater than 1.60, each of the ratios being a ratio (length of major axis / length of minor axis) of a length of a major axis of a corresponding one of particles of the ferrite powder for bonded magnet to a length of a minor axis of the corresponding one of the particles, the length of the major axis of the corresponding one of the particles being 0.5 $\mu$m or more. The coercivity iHc of a pressurized powder body of the ferrite powder for bonded magnet is preferably in the range of from 3000 Oe to 4500 Oe.

Using the method of the invention, a ferrite powder for bonded magnet may also be obtained, wherein an average particle diameter obtained by an air transmission method is in the range of from 0.5 $\mu$m to 2 $\mu$m, and a coercivity iHc of a pressurized powder body of the ferrite powder for bonded magnet is in the range of from 3000 Oe to 4500 Oe, and wherein y > -0.000228x + 4.25 assuming that the coercivity iHc (Oe) of the pressurized powder body is x and that a compression

3

density CD (g/cm$^3$) of the pressurized powder body is y. The average value of ratios is preferably 1.60 or less, each of the ratios being a ratio (length of major axis / length of minor axis) of a length of a major axis of a corresponding one of particles of the ferrite powder for bonded magnet to a length of a minor axis of the corresponding one of the particles, the length of the major axis of the corresponding one of the particles being 0.5 $\mu$m or more.

The bonded magnet using the above-described ferrite powder for bonded magnet preferably has a coercivity iHc of not less than 4000 Oe and a residual magnetization Br of not less than 2800 G when the coercivity iHc and the residual magnetization Br are measured in a measuring magnetic field of 10 kOe, the bonded magnet being a cylindrical bonded magnet having a diameter of 15 mm x a height of 8 mm (the direction of magnetic field orientation of the bonded magnet being a direction along the central axis thereof), the bonded magnet being produced by injection-molding a kneaded pellet having an average diameter of 2 mm at a temperature of 290 °C at a molding pressure of 8.5 N/mm$^2$ in a magnetic field of 4.3 kOe, the kneaded pellet being produced by kneading a mixture at 230 °C, the mixture being obtained by filling and mixing 90.0 parts by weight of the ferrite powder for bonded magnet, 0.8 parts by weight of a silane coupling agent, 0.8 parts by weight of a lubricant and 8.4 parts by weight of a polyamide resin powder in a mixer. The ferrite powder for bonded magnet preferably has a specific surface area of 0.5 to 10 m$^2$/g. The average value of ratios is preferably 1.60 or less, each of the ratios being a ratio (length of major axis / length of minor axis) of a length of a major axis of a corresponding one of particles of the ferrite powder for bonded magnet to a length of a minor axis of the corresponding one of the particles, the length of the major axis of the corresponding one of the particles being 1.0 $\mu$m or more.

A bonded magnet may comprise: the above-described ferrite powder for bonded magnet; and a binder.

Throughout the specification, the expression "ratio of the length of a major axis to the length of a minor axis" means a ratio (length of major axis / length of minor axis) of the length of a major axis (the maximum value in distance between two straight lines parallel to each other (the length of a segment of a line drawn in directions perpendicular to the two straight lines parallel to each other) when one particle is put between the straight lines) to the length of a minor axis (the minimum value in distance between the two straight lines parallel to each other when the one particle is put between the straight lines). With respect to the ferrite powder for bonded magnet the expression "average particle diameter obtained by an air transmission method" means an average particle diameter obtained by an air transmission method (a method for measuring an average particle diameter of a powder on the basis of the permeability of air when air is caused to pass through a packed bed of the powder). The expression "specific surface area" means a BET specific surface area measured by means of a specific surface area measuring apparatus using the single point BET method. The expression "compression density" of a ferrite powder for bonded magnet means the density of the ferrite powder for bonded magnet when 10 g of the ferrite powder for bonded magnet is filled in a cylindrical die having an inside diameter of 2.54 cm $\phi$ to be compressed at a pressure of 1 ton/cm$^2$ (1 ton/cm$^2$ = 98 MPa)

Effects of the Invention

According to the present invention, it is possible to produce a ferrite powder for bonded magnet, which can obtain a bonded magnet having a high coercivity iHc and a high residual magnetization Br.

Brief Description of the Drawings

FIG. 1 is a scanning electron microscope (SEM) image of a coarse ferrite powder obtained in Example 1;
FIG. 2 is a SEM image of a coarse ferrite powder obtained in Comparative Example 2; and
FIG. 3 is a graph showing the relationship between the compression densities CD and coercivities iHc of ferrite powders for bonded magnet, which are obtained in Examples 1-2 and Comparative Examples 1-2.

Mode for Carrying Out the Invention

The preferred embodiment of a method for producing a ferrite powder for bonded magnet according to the present invention, comprises the steps of: mixing a complex oxide of iron and strontium, iron oxide, and a flux to obtain a mixture; granulating the mixture to obtain a granulated mixture; firing the granulated mixture to obtain a fired substance; coarsely pulverizing the fired substance to obtain a coarse ferrite powder; mixing the coarse ferrite powder with a fine ferrite powder having a larger specific surface area than that of the coarse ferrite powder to obtain a mixed ferrite powder; and annealing the mixed ferrite powder.

The complex oxide of iron and strontium is preferably an oxide crystal, and is preferably produced by firing a granulated substance which is obtained by mixing and granulating iron oxide (hematite ($\alpha$-Fe$_2$O$_3$)) and strontium carbonate so that the ratio (Fe/Sr) of Fe to Sr is in the range of from 0.5 to 2.5. If the complex oxide of iron and strontium, which is obtained by firing a granulated substance which is obtained by mixing and granulating iron oxide and strontium carbonate so that the ratio (Fe/Sr) of Fe to Sr is in the range of from 0.5 to 2.5, is used, it is possible to obtain a ferrite powder for bonded magnet, which has a high compression density. The complex oxide of iron and strontium thus obtained is preferably mixed with iron oxide (hematite ($\alpha$ -Fe$_2$O$_3$)) so that the ratio (Fe (total) /Sr) of Fe to Sr is in the range of from 11.0 to 12.0. The average value of ratios is preferably 1.60 or less, each of the ratios being a ratio (length of major axis / length of minor axis) of a length of a major axis of a corresponding one of particles of the ferrite powder for bonded magnet to a length of a minor axis of the corresponding one of the particles, the length of the major axis of the corresponding one of the particles being 1.0 $\mu$m or more. The average value of ratios is preferably 1.60 or less, each of the ratios being a ratio (length of major axis / length of minor axis) of a length of a major axis of a corresponding one of particles of the ferrite powder for bonded magnet to a length of a minor axis of the corresponding one of the particles, the length of the major axis of the corresponding one of the particles being 0.5 $\mu$m or more. The flux is preferably boric acid. The fine ferrite powder can be obtained by firing and pulverizing a granulated substance at a temperature of lower than the firing temperature for obtaining the coarse ferrite powder, the granulated substance being obtained by mixing and granulating $\alpha$ -Fe$_2$O$_3$ and strontium carbonate.

In the preferred embodiment of a ferrite powder for bonded magnet, the average particle diameter obtained by an air transmission method is in the range of from 1.00 $\mu$m to 1.24 $\mu$m, and the average value of ratios is not greater than 1.60, each of the ratios being a ratio (length of major axis / length of minor axis) of a length of a major axis of a corresponding one of particles of the ferrite powder for bonded magnet to a length of a minor axis of the corresponding one of the particles, the length of the major axis of the corresponding one of the particles being 0.5 $\mu$m or more. If there is used such a ferrite powder for bonded magnet wherein the average particle diameter obtained by the air transmission method is in the range of from 1.00 $\mu$m to 1.24 $\mu$m and wherein the average value of ratios is not greater than 1.60, each of the ratios being a ratio (length of major axis / length of minor axis) of a length of a major axis of a corresponding one of particles of the ferrite powder for bonded magnet to a length of a minor axis of the corresponding one of the particles, the length of the major axis of the corresponding one of the particles being 0.5 $\mu$m or more, it is possible to obtain a bonded magnet having a high coercivity iHc and a high residual magnetization Br. The coercivity iHc of a pressurized powder body of this ferrite powder for bonded magnet is preferably in the range of from 3000 Oe to 4500 Oe. In the preferred embodiment of a ferrite powder for bonded magnet, the average particle diameter obtained by an air transmission method is in the range of from 0.5 $\mu$m to 2 $\mu$m, and the coercivity iHc of a pressurized powder body of the ferrite powder for bonded magnet is in the range of from 3000 Oe to 4500 Oe (preferably in the range of from 3250 Oe to 4200 Oe), and y > -0.000228x + 4.25 assuming that the coercivity iHc (Oe) of the pressurized powder body is x and that the compression density CD (g/cm$^3$) of the pressurized powder body is y. In this ferrite powder for bonded magnet, the average value of ratios is preferably 1.60 or less, each of the ratios being a ratio (length of major axis / length of minor axis) of a length of a major axis of a corresponding one of particles of the ferrite powder for bonded magnet to a length of a minor axis of the corresponding one of the particles, the length of the major axis of the corresponding one of the particles being 0.5 $\mu$m or more. If this average value is 1.60 or less, large particles are easy to move in the ferrite powder for bonded magnet to enhance the compression density of the ferrite powder for bonded magnet, so that the fluidability thereof is improved.

Furthermore, the average particle diameter $d_m$ obtained by the air transmission method can be calculated from the following numerical formulae 1 and 2 if a period of time t (second), which is required for air having a volume Q (cc) to pass through a packed bed having a thickness L (cm) of the ferrite powder for bonded magnet, and a difference $\Delta$p(g/cm$^2$) in pressure between both ends of the packed bed are measured when air is caused to pass through the packed bed.

[Numerical Formula 1]

$$d_m = \frac{6}{14} \sqrt{ \frac{\eta\, LQ}{\Delta pAt} \cdot \frac{(1 - \varepsilon)^2}{\varepsilon^3} }$$

[Numerical Formula 2]

$$\varepsilon = 1 - \frac{W}{\rho\, AL}$$

In the numerical formulae 1 and 2, $\eta$ denotes the coefficient of viscosity (poise) of air, and A denotes the cross-sectional area ($cm^2$) of the packed bed in directions perpendicular to the flow direction, $\varepsilon$ denoting the porosity (void fraction) of the packed bed, W denoting the weight (g) of the ferrite powder for bonded magnet, and $\rho$ denoting the density ($g/cm^3$) of the ferrite powder for bonded magnet.

The bonded magnet using the above-described ferrite powder for bonded magnet preferably has a coercivity iHc of not less than 4000 Oe and a residual magnetization Br of not less than 2800 G when the coercivity iHc and the residual magnetization Br are measured in a measuring magnetic field of 10 kOe, the bonded magnet being a cylindrical bonded magnet having a diameter of 15 mm x a height of 8 mm (the direction of magnetic field orientation of the bonded magnet being a direction along the central axis thereof), the bonded magnet being produced by injection-molding a kneaded pellet having an average diameter of 2 mm at a temperature of 290 °C at a molding pressure of 8.5 $N/mm^2$ in a magnetic field of 4.3 kOe, the kneaded pellet being produced by kneading a mixture at 230 °C, the mixture being obtained by filling and mixing 90.0 parts by weight of the ferrite powder for bonded magnet, 0.8 parts by weight of a silane coupling agent, 0.8 parts by weight of a lubricant and 8.4 parts by weight of a polyamide resin powder in a mixer. The ferrite powder for bonded magnet preferably has a specific surface area of 0.5 to 10 $m^2/g$, more preferably has a specific surface area of 1 to 5 $m^2/g$, and most preferably has a specific surface area of 2.3 to 4 $m^2/g$. The average value of ratios is preferably 1.60 or less, each of the ratios being a ratio (length of major axis / length of minor axis) of a length of a major axis of a corresponding one of particles of the ferrite powder for bonded magnet to a length of a minor axis of the corresponding one of the particles, the length of the major axis of the corresponding one of the particles being 1.0 $\mu$m or more. If this average value is 1.6 or less, large particles are easy to move in the ferrite powder for bonded magnet to enhance the compression density of the ferrite powder for bonded magnet, so that the fluidability thereof is improved. The compression density of the ferrite powder for bonded magnet is preferably 3.2 $g/cm^3$ or more, and more preferably 3.3 $g/cm^3$ or more. Furthermore, if the chemical formula of the ferrite powder for bonded magnet is expressed as $SrO \cdot n(Fe_2O_3)$, n is preferably 5.0 to 6.0, and more preferably 5.4 to 5.9.

The preferred embodiment of a bonded magnet comprises: the above-described ferrite powder for bonded magnet; and a binder. Furthermore, when the ferrite powder for bonded magnet is mixed with a resin and so forth in order to produce the bonded magnet, the melt flow rate MFR is preferably 40 g / 10 minutes or more, and more preferably 80 g / 10 minutes or more.

Examples

Examples of a ferrite powder for bonded magnet and a method for producing the same according to the present invention will be described below in detail.

[Example 1]

(production of Coarse ferrite Powder)

First, hematite ($\alpha$-$Fe_2O_3$, specific surface area = 5.3 $m^2/g$) and strontium carbonate ($SrCO_3$, specific surface area = 5.8 $m^2/g$) were weighed to be mixed in a molar ratio of 0.5 : 1.0 (the molar ratio (Fe/Sr) of Fe to Sr = 1.0). The mixture thus obtained was granulated while water was added thereto in a pan pelletizer. The granulated spherical particles having diameters of 3 to 10 mm thus obtained were put into an internal-combustion rotary kiln to be fired at 1050 °C for 20 minutes in the atmosphere to obtain a fired substance. This fired substance was pulverized by means of a roller mill to obtain a complex oxide powder (having a specific surface area of 1.71 $m^2/g$) of iron and strontium. This complex oxide powder of iron and strontium, and hematite ($\alpha$-$Fe_2O_3$, specific surface area = 5.3 $m^2/g$) were weighed to be mixed so that the molar ratio (Fe (total)/Sr) of Fe (total) to Sr was 11.7. This mixture thus obtained was mixed with 0.17 % by weight of boric acid and 2.3 % by weight of potassium chloride. Then, water was added thereto to granulate the mixture. The granulated spherical particles having diameters of 3 to 10 mm thus obtained were put into an internal-combustion rotary kiln to be fired at 1210 °C (firing temperature) for 20 minutes in the atmosphere. The fired substance thus obtained was pulverized by means of a roller mill to obtain a coarse ferrite powder.

The specific surface area (SSA) of this coarse ferrite powder was measured by means of a specific surface area measuring apparatus (Monosorb produced by Yuasa Ionics Co., Ltd.) using the single point BET method. As a result, the specific surface area of the coarse ferrite powder was 1.47 $m^2/g$. As the shape index of the coarse ferrite powder, the average value of ratios was obtained, each of the ratios being a ratio (length of major axis / length of minor axis) of the length of a major axis (the maximum value in distance between two straight lines parallel to each other when one particle was put between the straight lines) of a corresponding one of particles of the coarse ferrite powder to the length of a minor axis (the minimum value in distance between the two straight lines parallel to each other when the one particle was put between the straight lines) of the corresponding one of the particles, the length of the major axis of the corresponding one of the particles being not less than 1.0 $\mu$m. As a result, the average value of the ratios was 1.55, so that the shape of the particles was good.

Furthermore, the ratio (length of major axis / length of minor axis) of the length of the major axis to the length of the minor axis was obtained as follows. First, 4.5 g of the coarse ferrite powder, 5.7 g of NC clear lacquer and 30 g of stainless beads having diameters of 2 mm were put into a centrifugal ball mill (PULNERISETTE type 702 produced by FRITSCH Corporation) to be pulverized at a rotation number of 200 rpm for 20 minutes to be dispersed to obtain a paint. After this paint was applied on a sheet by means of an applicator bar, a magnetic field of 5 kOe was applied to the applied paint in parallel to the applied surface thereof to orientate the paint so as to be able to measure the particle diameter of the particles on the applied surface in the C-axis direction from the above (since the C-axis direction of the particles of the coarse ferrite powder was parallel to the applied surface). The dried sheet of the applied paint was observed by means of a scanning electron microscope (SEM) (S-3400N produced by Hitachi High-Technologies Corporation). With respect to 200 particles or more in a SEM image having a magnification of 5,000 (the whole outer edge of the 200 particles or more being observed in (one or more of) fields of vision in the SEM image, and the length of the major axis of the 200 particles or more being 1.0 $\mu$m or more), the lengths of the major axes and the lengths of the minor axes were measured, and the average value of the ratios (length of major axis / length of minor axis) was calculated.

(Production of Fine ferrite Powder)

First, hematite ($\alpha$-Fe$_2$O$_3$) and strontium carbonate (SrCO$_3$) were weighed to be mixed in a molar ratio of 5.6 : 1.0 (the molar ratio (Fe/Sr) of Fe to Sr = 11.0) to obtain a mixture. Then, water was added to the mixture to granulate the mixture to obtain granulated spherical particles having diameters of 3 to 10 mm. Then, the granulated spherical particles were put into an internal-combustion rotary kiln to be fired at 970 °C for 20 minutes in the atmosphere to obtain a fired substance. After this fired substance was coarsely pulverized by means of a roller mill, the coarsely pulverized substance was dry-pulverized by means of a vibratory ball mill to obtain a fine ferrite powder. Furthermore, the specific surface area of the fine ferrite powder was measured by the same method as the above-described method. As a result, the specific surface area of the fine ferrite powder was 7.0 m$^2$/g.

(Production of Ferrite Powder for Bonded Magnet)

First, 100 parts by weight of the coarse ferrite powder thus obtained and 42 parts by weight of the fine ferrite powder (coarse powder : fine powder = 70 : 30), together with 210 parts by weight of water, were put into a wet attritor to be wet-pulverized and mixed for 20 minutes to obtain a slurry. This slurry was filtered to obtain a solid body. This solid body was dried at 150 °C for 10 hours in the atmosphere to obtain a dry cake. This dry cake was crushed by means of a mixer to obtain a crushed substance. This crushed substance was pulverized at a rotation number of 1800 rpm in an amplitude of 8 mm for 14 minutes by means of a vibratory ball mill (Uras Vibrator, KEC-8-YH produced by Murakami Seiki Mfg Co., Ltd.) using steel balls having a diameter of 12 mm as media. The pulverized substance thus obtained was annealed at 980 °C for 30 minutes in the atmosphere by means of an electric furnace to obtain a ferrite powder for bonded magnet.

The composition analysis of the ferrite powder for bonded magnet was carried out by calculating the ingredient amount of each element by the fundamental parameter method (FP method) by means of a fluorescent X-ray analyzer (ZSX 100e produced by Rigaku Corporation). In this composition analysis, the ferrite powder for bonded magnet was filled in a measuring cell to be molded by applying a pressure of 10 tons/cm$^2$ thereto for 20 seconds, to carry out the qualitative analysis thereof at a measuring diameter of 30 mm in a measuring mode of EZ scan mode in the sample form of an oxide for a measuring time of standard time in a vacuum, and then, to carry out the quantitative analysis of the detected constituent elements. As a result, the ferrite powder for bonded magnet was detected to contain 0.1 % by weight of Cr$_2$O$_3$, 0.4 % by weight of MnO, 89.0 % by weight of Fe$_2$O$_3$, 10.3 % by weight of SrO and 0.2 % by weight of BaO, so that Sr and Fe being the main components of the ferrite powder for bonded magnet were detected. Furthermore, although elements, such as Cr, Mn and Ba, considered to be derived from impurities in the raw materials, were detected, the amount of each of the elements was a very small amount of 0.4 % or less when the elements were converted into oxides. Assuming that the very small amounts (1.0 % by weight or less when the elements were converted into oxides) of the elements were impurities, if the chemical formula of the ferrite powder for bonded magnet was expressed as SrO·n(Fe$_2$O$_3$) from the analyzed values of Sr and Fe being the main components, n was calculated to be n = 5.61.

The average particle diameter (APD) of the ferrite powder for bonded magnet was obtained by an air transmission method by means of a specific surface area measuring apparatus (SS-100 produced by Shimadzu Corporation). Specifically, the average particle diameter was calculated from the numerical formulae 1 and 2 after measuring the time (second), which was required for air having a volume Q (= 2.0 cm$^3$) to pass through the packed bed of the ferrite powder for bonded magnet, and the difference $\Delta$ p (g/cm$^2$) in pressure between both ends of the packed bed, when air is caused to pass through the packed bed, assuming that the thickness L of the packed bed was 1.0 cm, that the cross-sectional area of the packed bed in directions perpendicular to the flow direction of air was 2.0 cm$^2$, that the weight W of the ferrite powder for bonded magnet was 5.0 g, that the coefficient $\eta$ of viscosity of air was 180 x 10$^{-4}$ (poise) and that the density $\rho$ of the ferrite powder for bonded magnet was 5.1 g/cm$^3$. As a result, the time required for air having the volume Q (= 2.0 cm$^3$) to pass

through the packed bed was 88 seconds, and the difference $\Delta$p in pressure between both ends of the packed bed was 40.0 $g/cm^2$, so that the average particle diameter was 1.21 $\mu$m. The specific surface area of the ferrite powder for bonded magnet was measured by the same method as the above-described method. As a result, the specific surface area was 2.37 $m^2/g$. With respect to this ferrite powder for bonded magnet, the average value of ratios was calculated by the same method as the above-described method, each of the ratios being a ratio of the length of a major axis of a corresponding one of particles of the ferrite powder for bonded magnet to the length of a minor axis of the corresponding one of the particles, the length of the major axis of the corresponding one of the particles being not less than 1.0 $\mu$m and 0.5 $\mu$m, respectively. As a result, the average value of the ratios was 1.53 when the length of the major axis of each of the particles was not less than 1.0 $\mu$m, and the average value of the ratios was 1.54 when the length of the major axis of each of the particles was not less than 0.5 $\mu$m. After 10 g of the ferrite powder for bonded magnet was filled in a cylindrical die having an inside diameter of 2.54 cm $\phi$ , when a pressure of 1 $ton/cm^2$ was applied to the ferrite powder for bonded magnet, the density of the ferrite powder for bonded magnet was measured as the compression density (CD) of the ferrite powder for bonded magnet. As a result, the compression density (CD) was 3.52 $g/cm^3$. After 8 g of the ferrite powder for bonded magnet and 0.4 cc of a polyester resin (P-resin produced by Nichika Inc.) were kneaded in a mortar, 7 g of the kneaded substance thus obtained was filled in a die having an inside diameter of 15 mm$\phi$, and a pressure of 1 $ton/cm^2$ was applied to the filled substance for 40 seconds. The molded article thus obtained was taken out from the die to be dried at 150 °C for 30 minutes to obtain a pressurized powder body. As the magnetic characteristics of this pressurized powder body, the coercivity iHc and residual magnetization Br thereof were measured in a measuring magnetic field of 10 kOe by means of a BH tracer (TRF-5BH produced by Toei Industry Co., Ltd.) . As a result, the coercivity iHc was 3290 Oe, and the residual magnetization Br was 1990 G.

(Production of Bonded Magnet)

First, 90.0 parts by weight of the ferrite powder for bonded magnet, 0.8 parts by weight of a silane coupling agent (Z-6094N produced by Toray Dow Corning, Co., Ltd.), 0.8 parts by weight of a lubricant (VPN-212P produced by Henkel AG & KGaA) and 8.4 parts by weight of a polyamide resin (P-1011F produced by Ube Industries, Inc.) were weighed to be filled in a mixer to be mixed to obtain a mixture. This mixture was kneaded at 230 °C to obtain a kneaded pellet having an average diameter of 2 mm. Furthermore, a melt flow indexer (Melt Flow Indexer C-5059D2 produced by Toyo Seiki Co., Ltd.) was used for measuring the weight of the above-described mixture which was extruded at 270 °C by a load of 10 kg. This weight was converted into the amount of the mixture, which was extruded per 10 minutes, to obtain a melt flow rate MFR during the mixing of the ferrite powder for bonded magnet. As a result, the melt flow rate was 90 g / 10 minutes. This kneaded pellet was loaded in an injection molding machine (produced by Sumitomo Heavy Industries, Ltd.) to be injection-molded at a temperature of 290 °C at a molding pressure of 8.5 $N/mm^2$ in a magnetic field of 4.3 kOe to obtain a cylindrical bonded magnet (F.C. 90.0 % by weight, 4.3 kOe) having a diameter of 15 mm x a height of 8 mm (the direction of magnetic field orientation of the bonded magnet is a direction along the central axis thereof).

As the magnetic characteristics of the bonded magnet, a BH tracer (TRF-5BH produced by Toei Industry Co., Ltd.) was used for measuring the coercivity iHc, residual magnetization Br and maximum energy product $BH_{max}$ of the bonded magnet in a measuring magnetic field of 10 kOe. As a result, the coercivity iHc was 4093 Oe, the residual magnetization Br was 2871 G, and the maximum energy product $BH_{max}$ was 2.03 MGOe (1 MGOe = 7.95775 $kJ/m^3$).

[Example 2]

After a coarse ferrite powder was produced by the same method as that in Example 1, except that the firing temperature was changed from 1210 °C to 1150 °C when the coarse ferrite powder was produced, the produced coarse ferrite powder was used for obtaining a ferrite powder for bonded magnet by the same method as that in Example 1. Furthermore, with respect to the coarse ferrite powder produced in this example, the specific surface area thereof was measured by the same method as that in Example 1, and the average value of ratios was obtained by the same method as that in Example 1, each of the ratios being a ratio (length of major axis / length of minor axis) of the length of a major axis of a corresponding one of particles of the coarse ferrite powder to the length of a minor axis of the corresponding one of the particles, the length of the major axis of the corresponding one of the particles being not less than 1.0 $\mu$m. As a result, the specific surface area was 2.14 $m^2/g$, and the average value of the ratios was 1.58, each of the ratios being the ratio (length of major axis / length of minor axis) of the length of the major axis of the corresponding one of the particles to the length of the minor axis of the corresponding one of the particles, the length of the major axis of the corresponding one of the particles being not less than 1.0 $\mu$m.

The composition analysis of this ferrite powder for bonded magnet was carried out by the same method as that in Example 1. As a result, the ferrite powder for bonded magnet was detected to contain 0.1 % by weight of $Cr_2O_3$, 0.4 % by weight of MnO, 88.9 % by weight of $Fe_2O_3$, 10.4 % by weight of SrO and 0.2 % by weight of BaO, so that Sr and Fe being the main components of the ferrite powder for bonded magnet were detected. Furthermore, although elements, such as Cr, Mn and Ba, considered to be derived from impurities in the raw materials, were detected, the amount of each of the elements was a very small amount of 0.4 % or less when the elements were converted into oxides. Assuming that the very small amounts (1.0 % by weight or less when the elements were converted into oxides) of the elements were impurities, if the chemical formula of the ferrite powder for bonded magnet was expressed as $SrO \cdot n(Fe_2O_3)$ from the analyzed values of Sr and Fe being the main components, n was calculated to be n = 5.55.

With respect to this ferrite powder for bonded magnet, the average particle diameter thereof was obtained by the same method as that in Example 1, and the specific surface area thereof was measured by the same method as that in Example 1. In addition, the average value of ratios was calculated by the same method as that in Example 1, each of the ratios being a ratio (length of major axis / length of minor axis) of the length of a major axis of a corresponding one of particles of the ferrite powder for bonded magnet to the length of a minor axis of the corresponding one of the particles, the length of the major axis of the corresponding one of the particles being not less than 1.0 $\mu$m and 0.5 $\mu$m, respectively. Moreover, the compression density of the ferrite powder for bonded magnet, and the coercivity iHc and residual magnetization Br of the pressurized powder body were measured by the same methods as those in Example 1. As a result, the average particle diameter was 1.10 $\mu$m, and the specific surface area was 2.60 m$^2$/g. The average value of the ratios was 1.57 when the length of the major axis of each of the particles was not less than 1.0 $\mu$m, and the average value of the ratios was 1.57 when the length of the major axis of each of the particles was not less than 0.5 $\mu$m. The compression density was 3.35 g/cm$^3$, the coercivity iHc of the pressurized powder body was 4030 Oe, and the residual magnetization Br of the pressurized powder body was 1900 G.

The ferrite powder for bonded magnet was used for producing a bonded magnet by the same method as that in Example 1. The coercivity iHc, residual magnetization Br and maximum energy product BH$_{max}$ of the bonded magnet were measured by the same methods as those in Example 1. As a result, the coercivity iHc was 4842 Oe, the residual magnetization Br was 2808 G, and the maximum energy product BH$_{max}$ was 1.93 MGOe. Furthermore, the melt flow rate MFR during the mixing of the ferrite powder for bonded magnet was obtained by the same method as that in Example 1. As a result, the melt flow rate MFR was 84 g / 10 minutes.

[Example 3]

A ferrite powder for bonded magnet was obtained by the same method as that in Example 1, except that the annealing temperature was changed from 980 °C to 950 °C.

The composition analysis of this ferrite powder for bonded magnet was carried out by the same method as that in Example 1. As a result, the ferrite powder for bonded magnet was detected to contain 0.1 % by weight of $Cr_2O_3$, 0.4 % by weight of MnO, 88.9 % by weight of $Fe_2O_3$, 10.3 % by weight of SrO and 0.2 % by weight of BaO, so that Sr and Fe being the main components of the ferrite powder for bonded magnet were detected. Furthermore, although elements, such as Cr, Mn and Ba, considered to be derived from impurities in the raw materials, were detected, the amount of each of the elements was a very small amount of 0.4 % or less when the elements were converted into oxides. Assuming that the very small amounts (1.0 % by weight or less when the elements were converted into oxides) of the elements were impurities, if the chemical formula of the ferrite powder for bonded magnet was expressed as $SrO \cdot n(Fe_2O_3)$ from the analyzed values of Sr and Fe being the main components, n was calculated to be n = 5.50.

With respect to this ferrite powder for bonded magnet, the average particle diameter thereof was obtained by the same method as that in Example 1, and the specific surface area thereof was measured by the same method as that in Example 1. Ibn addition, the average value of ratios was calculated by the same method as that in Example 1, each of the ratios being a ratio (length of major axis / length of minor axis) of the length of a major axis of a corresponding one of particles of the ferrite powder for bonded magnet to the length of a minor axis of the corresponding one of the particles, the length of the major axis of the corresponding one of the particles being not less than 1.0 $\mu$m and 0.5 $\mu$m, respectively. Moreover, the compression density of the ferrite powder for bonded magnet, and the coercivity iHc and residual magnetization Br of the pressurized powder body were measured by the same methods as those in Example 1. As a result, the average particle diameter was 1.11 $\mu$m, and the specific surface area was 2.52 m$^2$/g. The average value of the ratios was 1.55 when the length of the major axis of each of the particles was not less than 1.0 $\mu$m, and the average value of the ratios was 1.58 when the length of the major axis of each of the particles was not less than 0.5 $\mu$m. The compression density was 3.39 g/cm$^3$, the coercivity iHc of the pressurized powder body was 3950 Oe, and the residual magnetization Br of the pressurized powder body was 1870 G.

The ferrite powder for bonded magnet was used for producing a bonded magnet by the same method as that in Example 1. The coercivity iHc, residual magnetization Br and maximum energy product BH$_{max}$ of the bonded magnet were measured by the same methods as those in Example 1. As a result, the coercivity iHc was 4868 Oe, the residual magnetization Br was 2840 G, and the maximum energy product BH$_{max}$ was 1.97 MGOe. Furthermore, the melt flow rate MFR during the mixing of the ferrite powder for bonded magnet was obtained by the same method as that in Example 1. As a result, the melt flow rate MFR was 88 g / 10 minutes.

[Example 4]

After a coarse ferrite powder was produced by the same method as that in Example 1, except that the complex oxide powder of iron and strontium, and hematite ($\alpha$-$Fe_2O_3$) were weighed to be mixed so that the molar ratio (Fe (total)/Sr) of Fe (total) to Sr was 11.9 and that the firing temperature was changed from 1210 °C to 1175 °C when the coarse ferrite powder was produced, the produced coarse ferrite powder was used for obtaining a ferrite powder for bonded magnet by the same method as that in Example 1. Furthermore, with respect to the coarse ferrite powder produced in this example, the specific surface area thereof was measured by the same method as that in Example 1, and the average value of ratios was obtained by the same method as that in Example 1, each of the ratios being a ratio (length of major axis / length of minor axis) of the length of a major axis of a corresponding one of particles of the coarse ferrite powder to the length of a minor axis of the corresponding one of the particles, the length of the major axis of the corresponding one of the particles being not less than 1.0 $\mu$m. As a result, the specific surface area was 1.72 m²/g, and the average value of the ratios was 1.58, each of the ratios being the ratio (length of major axis / length of minor axis) of the length of the major axis of the corresponding one of the particles to the length of the minor axis of the corresponding one of the particles, the length of the major axis of the corresponding one of the particles being not less than 1.0 $\mu$m.

The composition analysis of this ferrite powder for bonded magnet was carried out by the same method as that in Example 1. As a result, the ferrite powder for bonded magnet was detected to contain 0.1 % by weight of $Cr_2O_3$, 0.4 % by weight of MnO, 89.1 % by weight of $Fe_2O_3$, 10.1 % by weight of SrO and 0.2 % by weight of BaO, so that Sr and Fe being the main components of the ferrite powder for bonded magnet were detected. Furthermore, although elements, such as Cr, Mn and Ba, considered to be derived from impurities in the raw materials, were detected, the amount of each of the elements was a very small amount of 0.4 % or less when the elements were converted into oxides. Assuming that the very small amounts (1.0 % by weight or less when the elements were converted into oxides) of the elements were impurities, if the chemical formula of the ferrite powder for bonded magnet was expressed as $SrO \cdot n(Fe_2O_3)$ from the analyzed values of Sr and Fe being the main components, n was calculated to be n = 5.72.

With respect to this ferrite powder for bonded magnet, the average particle diameter thereof was obtained by the same method as that in Example 1, and the specific surface area thereof was measured by the same method as that in Example 1. In addition, the average value of ratios was calculated by same method as that in Example 1, each of the ratios being a ratio (length of major axis / length of minor axis) of the length of a major axis of a corresponding one of particles of the ferrite powder for bonded magnet to the length of a minor axis of the corresponding one of the particles, the length of the major axis of the corresponding one of the particles being not less than 1.0 $\mu$m and 0.5 $\mu$m, respectively. Moreover, the compression density of the ferrite powder for bonded magnet, and the coercivity iHc and residual magnetization Br of the pressurized powder body were measured by the same methods as those in Example 1. As a result, the average particle diameter was 1.12 $\mu$m, and the specific surface area was 2.54 m²/g. The average value of the ratios was 1.59 when the length of the major axis of each of the particles was not less than 1.0 $\mu$m, and the average value of the ratios was 1.55 when the length of the major axis of each of the particles was not less than 0.5 $\mu$m. The compression density was 3.43 g/cm³, the coercivity iHc of the pressurized powder body was 3720 Oe, and the residual magnetization Br of the pressurized powder body was 1920 G.

The ferrite powder for bonded magnet was used for producing a bonded magnet by the same method as that in Example 1. The coercivity iHc, residual magnetization Br and maximum energy product $BH_{max}$ of the bonded magnet were measured by the same methods as those in Example 1. As a result, the coercivity iHc was 4458 Oe, the residual magnetization Br was 2844 G, and the maximum energy product $BH_{max}$ was 1.98 MGOe. Furthermore, the melt flow rate MFR during the mixing of the ferrite powder for bonded magnet was obtained by the same method as that in Example 1. As a result, the melt flow rate MFR was 88 g / 10 minutes.

[Example 5]

After a coarse ferrite powder was produced by the same method as that in Example 1, except that the complex oxide powder of iron and strontium, and hematite ($\alpha$-$Fe_2O_3$) were weighed to be mixed so that the molar ratio (Fe (total)/Sr) of Fe (total) to Sr was 11.4 and that the firing temperature was changed from 1210 °C to 1150 °C when the coarse ferrite powder was produced, the produced coarse ferrite powder was used for obtaining a ferrite powder for bonded magnet by the same method as that in Example 1. Furthermore, with respect to the coarse ferrite powder produced in this example, the specific surface area thereof was measured by the same method as that in Example 1, and the average value of ratios was obtained by the same method as that in Example 1, each of the ratios being the ratio (length of major axis / length of minor axis) of the length of a major axis of a corresponding one of particles of the coarse ferrite powder to the length of a minor axis of the corresponding one of the particles, the length of the major axis of the corresponding one of the particles being not less than 1.0 $\mu$m. As a result, the specific surface area was 1.58 m²/g, and the average value of the ratios was 1.52, each of the ratios being the ratio (length of major axis / length of minor axis) of the length of the major axis of the corresponding one of the particles to the length of the minor axis of the corresponding one of the particles, the length of the major axis of the corresponding one of the particles being not less than 1.0 $\mu$m.

The composition analysis of this ferrite powder for bonded magnet was carried out by the same method as that in Example 1. As a result, the ferrite powder for bonded magnet was detected to contain 0.1 % by weight of $Cr_2O_3$, 0.4 % by weight of MnO, 88.8 % by weight of $Fe_2O_3$, 10.5 % by weight of SrO and 0.2 % by weight of BaO, so that Sr and Fe being the main components of the ferrite powder for bonded magnet were detected. Furthermore, although elements, such as Cr, Mn and Ba, considered to be derived from impurities in the raw materials, were detected, the amount of each of the elements was a very small amount of 0.4 % or less when the elements were converted into oxides. Assuming that the very small amounts (1.0 % by weight or less when the elements were converted into oxides) of the elements were impurities, if the chemical formula of the ferrite powder for bonded magnet was expressed as $SrO \cdot n(Fe_2O_3)$ from the analyzed values of Sr and Fe being the main components, n was calculated to be n = 5.49.

With respect to this ferrite powder for bonded magnet, the average particle diameter thereof was obtained by the same method as that in Example 1, and the specific surface area thereof was measured by the same method as that in Example 1. In addition, the average value of ratios was calculated by the same method as that in Example 1, each of the ratios being a ratio (length of major axis / length of minor axis) of the length of a major axis of a corresponding one of particles of the ferrite powder for bonded magnet to the length of a minor axis of the corresponding one of the particles, the length of the major axis of the corresponding one of the particles being not less than 1.0 $\mu$m and 0.5 $\mu$m, respectively. Moreover, the compression density of the ferrite powder for bonded magnet, and the coercivity iHc and residual magnetization Br of the pressurized powder body were measured by the same methods as those in Example 1. As a result, the average particle diameter was 1.20 $\mu$m, and the specific surface area was 2.41 $m^2$/g. The average value of the ratios was 1.52 when the length of the major axis of each of the particles was not less than 1.0 $\mu$m, and the average value of the ratios was 1.52 when the length of the major axis of each of the particles was not less than 0.5 $\mu$m. The compression density was 3.48 g/$cm^3$, the coercivity iHc of the pressurized powder body was 3450 Oe, and the residual magnetization Br of the pressurized powder body was 1970 G.

The ferrite powder for bonded magnet was used for producing a bonded magnet by the same method as that in Example 1. The coercivity iHc, residual magnetization Br and maximum energy product $BH_{max}$ of the bonded magnet were measured by the same methods as those in Example 1. As a result, the coercivity iHc was 4061 Oe, the residual magnetization Br was 2863 G, and the maximum energy product $BH_{max}$ was 2.02 MGOe. Furthermore, the melt flow rate MFR during the mixing of the ferrite powder for bonded magnet was obtained by the same method as that in Example 1. As a result, the melt flow rate MFR was 102 g / 10 minutes.

[Comparative Example 1]

First, hematite ($\alpha$-$Fe_2O_3$) and strontium carbonate ($SrCO_3$) were weighed to be mixed in a molar ratio of 5.87 : 1.0 (the molar ratio (Fe/Sr) of Fe to Sr = 11.7). This mixture thus obtained was mixed with 0.17 % by weight of boric acid and 2.3 % by weight of potassium chloride. Then, water was added thereto to granulate the mixture. The granulated spherical particles having diameters of 3 to 10 mm thus obtained were put into an internal-combustion rotary kiln to be fired at 1180 °C (firing temperature) for 20 minutes in the atmosphere. The fired substance thus obtained was pulverized by means of a roller mill to obtain a coarse ferrite powder. With respect to this coarse ferrite powder, the specific surface area thereof was measured by the same method as that in Example 1, and the average value of ratios was obtained by the same method as that in Example 1, each of the ratios being a ratio (length of major axis / length of minor axis) of the length of a major axis of a corresponding one of particles of the coarse ferrite powder to the length of a minor axis of the corresponding one of the particles, the length of the major axis of the corresponding one of the particles being not less than 1.0 $\mu$m. As a result, the specific surface area was 1.73 $m^2$/g, and the average value of the ratios was 1.87, each of the ratios being the ratio (length of major axis / length of minor axis) of the length of the major axis of the corresponding one of the particles to the length of the minor axis of the corresponding one of the particles, the length of the major axis of the corresponding one of the particles being not less than 1.0 $\mu$m.

This coarse ferrite powder was used for producing a ferrite powder for bonded magnet by the same method as that in Example 1, except that the annealing temperature was changed to 980 °C when the ferrite powder for bonded magnet was produced.

The composition analysis of this ferrite powder for bonded magnet was carried out by the same method as that in Example 1. As a result, the ferrite powder for bonded magnet was detected to contain 0.1 % by weight of $Cr_2O_3$, 0.4 % by weight of MnO, 89.0 % by weight of $Fe_2O_3$, 10.2 % by weight of SrO and 0.2 % by weight of BaO, so that Sr and Fe being the main components of the ferrite powder for bonded magnet were detected. Furthermore, although elements, such as Cr, Mn and Ba, considered to be derived from impurities in the raw materials, were detected, the amount of each of the elements was a very small amount of 0.4 % or less when the elements were converted into oxides. Assuming that the very small amounts (1.0 % by weight or less when the elements were converted into oxides) of the elements were impurities, if the chemical formula of the ferrite powder for bonded magnet was expressed as $SrO \cdot n(Fe_2O_3)$ from the analyzed values of Sr and Fe being the main components, n was calculated to be n = 5.66.

With respect to this ferrite powder for bonded magnet, the average particle diameter thereof was obtained by the same method as that in Example 1, and specific surface area thereof was measured by the same method as that in Example 1. In addition, the average value of ratios was calculated by the same method as that in Example 1, each of the ratios being a ratio (length of major axis / length of minor axis) of the length of a major axis of a corresponding one of particles of the ferrite powder for bonded magnet to the length of a minor axis of the corresponding one of the particles, the length of the major axis of the corresponding one of the particles being not less than 1.0 $\mu$m and 0.5 $\mu$m, respectively. Moreover, the compression density of the ferrite powder for bonded magnet, and the coercivity iHc and residual magnetization Br of the pressurized powder body were measured by the same methods as those in Example 1. As a result, the average particle diameter was 1.15 $\mu$m, and the specific surface area was 2.69 m$^2$/g. The average value of the ratios was 1.92 when the length of the major axis of each of the particles was not less than 1.0 $\mu$m, and the average value of the ratios was 1.87 when the length of the major axis of each of the particles was not less than 0.5 $\mu$m. The compression density was 3.36 g/cm$^3$, the coercivity iHc of the pressurized powder body was 3700 Oe, and the residual magnetization Br of the pressurized powder body was 1820 G.

The ferrite powder for bonded magnet was used for producing a bonded magnet by the same method as that in Example 1. The coercivity iHc, residual magnetization Br and maximum energy product BH$_{max}$ of the bonded magnet were measured by the same methods as those in Example 1. As a result, the coercivity iHc was 4461 Oe, the residual magnetization Br was 2767 G, and the maximum energy product BH$_{max}$ was 1.87 MGOe. Furthermore, the melt flow rate MFR during the mixing of the ferrite powder for bonded magnet was obtained by the same method as that in Example 1. As a result, the melt flow rate MFR was 74 g / 10 minutes.

[Comparative Example 2]

After a coarse ferrite powder was produced by the same method as that in Comparative Example 1, except that the firing temperature was changed from 1180 °C to 1150 °C when the coarse ferrite powder was produced, the produced coarse ferrite powder was used for obtaining a ferrite powder for bonded magnet by the same method as that in Comparative Example 1. Furthermore, with respect to the coarse ferrite powder produced in this comparative example, the specific surface area thereof was measured by the same method as that in Example 1, and the average value of ratios was obtained by the same method as that in Example 1, each of the ratios being a ratio (length of major axis / length of minor axis) of the length of a major axis of a corresponding one of particles of the coarse ferrite powder to the length of a minor axis of the corresponding one of the particles, the length of the major axis of the corresponding one of the particles being not less than 1.0 $\mu$m. As a result, the specific surface area was 2.01 m$^2$/g, and the average value of the ratios was 1.91, each of the ratios being the ratio (length of major axis / length of minor axis) of the length of the major axis of the corresponding one of the particles to the length of the minor axis of the corresponding one of the particles, the length of the major axis of the corresponding one of the particles being not less than 1.0 $\mu$m.

The composition analysis of this ferrite powder for bonded magnet was carried out by the same method as that in Example 1. As a result, the ferrite powder for bonded magnet was detected to contain 0.1 % by weight of Cr$_2$O$_3$, 0.3 % by weight of MnO, 89.1 % by weight of Fe$_2$O$_3$, 10.2 % by weight of SrO and 0.2 % by weight of BaO, so that Sr and Fe being the main components of the ferrite powder for bonded magnet were detected. Furthermore, although elements, such as Cr, Mn and Ba, considered to be derived from impurities in the raw materials, were detected, the amount of each of the elements was a very small amount of 0.3 % or less when the elements were converted into oxides. Assuming that the very small amounts (1.0 % by weight or less when the elements were converted into oxides) of the elements were impurities, if the chemical formula of the ferrite powder for bonded magnet was expressed as SrO·n(Fe$_2$O$_3$) from the analyzed values of Sr and Fe being the main components, n was calculated to be n = 5.67.

With respect to this ferrite powder for bonded magnet, the average particle diameter thereof was obtained by the same method as that in Example 1, and the specific surface area thereof were measured by the same method as that in Example 1. In addition, the average value of ratios was calculated by the same method as that in Example 1, each of the ratios being a ratio (length of major axis / length of minor axis) of the length of a major axis of a corresponding one of particles of the ferrite powder for bonded magnet to the length of a minor axis of the corresponding one of the particles, the length of the major axis of the corresponding one of the particles being not less than 1.0 $\mu$m and 0.5 $\mu$m, respectively. Moreover, the compression density of the ferrite powder for bonded magnet, and the coercivity iHc and residual magnetization Br of the pressurized powder body were measured by the same methods as those in Example 1. As a result, the average particle diameter was 1.11 $\mu$m, and the specific surface area was 2.55 m$^2$/g. The average value of the ratios was 1.87 when the length of the major axis of each of the particles was not less than 1.0 $\mu$m, and the average value of the ratios was 1.89 when the length of the major axis of each of the particles was not less than 0.5 $\mu$m. The compression density was 3.28 g/cm$^3$, the coercivity iHc of the pressurized powder body was 4030 Oe, and the residual magnetization Br of the pressurized powder body was 1840 G.

The ferrite powder for bonded magnet was used for producing a bonded magnet by the same method as that in Example 1. The coercivity iHc, residual magnetization Br and maximum energy product BH$_{max}$ of the bonded magnet were measured by the same methods as those in Example 1. As a result, the coercivity iHc was 4625 Oe, the residual magnetization Br was 2736 G, and the maximum energy product $BH_{max}$ was 1.83 MGOe. Furthermore, the melt flow rate MFR during the mixing of the ferrite powder for bonded magnet was obtained by the same method as that in Example 1. As a result, the melt flow rate MFR was 58 g / 10 minutes.

[Comparative Example 3]

After a coarse ferrite powder was produced by the same method as that in Comparative Example 1, except that the firing temperature was changed from 1180 °C to 1175 °C when the coarse ferrite powder was produced, the produced coarse ferrite powder was used for obtaining a ferrite powder for bonded magnet by the same method as that in Comparative Example 1. Furthermore, with respect to the coarse ferrite powder produced in this comparative example, the specific surface area thereof was measured by the same method as that in Example 1, and the average value of ratios was obtained by the same method as that in Example 1, each of the ratios being a ratio (length of major axis / length of minor axis) of the length of a major axis of a corresponding one of particles of the coarse ferrite powder to the length of a minor axis of the corresponding one of the particles, the length of the major axis of the corresponding one of the particles being not less than 1.0 $\mu$m. As a result, the specific surface area was 1.67 m$^2$/g, and the average value of the ratios was 1.68, each of the ratios being the ratio (length of major axis / length of minor axis) of the length of the major axis of the corresponding one of the particles to the length of the minor axis of the corresponding one of the particles, the length of the major axis of the corresponding one of the particles being not less than 1.0 $\mu$m.

The composition analysis of this ferrite powder for bonded magnet was carried out by the same method as that in Example 1. As a result, the ferrite powder for bonded magnet was detected to contain 0.1 % by weight of $Cr_2O_3$, 0.4 % by weight of MnO, 89.0 % by weight of $Fe_2O_3$, 10.3 % by weight of SrO and 0.2 % by weight of BaO, so that Sr and Fe being the main components of the ferrite powder for bonded magnet were detected. Furthermore, although elements, such as Cr, Mn and Ba, considered to be derived from impurities in the raw materials, were detected, the amount of each of the elements was a very small amount of 0.4 % or less when the elements were converted into oxides. Assuming that the very small amounts (1.0 % by weight or less when the elements were converted into oxides) of the elements were impurities, if the chemical formula of the ferrite powder for bonded magnet was expressed as $SrO \cdot n(Fe_2O_3)$ from the analyzed values of Sr and Fe being the main components, n was calculated to be n = 5.61.

With respect to this ferrite powder for bonded magnet, the average particle diameter thereof was obtained by the same method as that in Example 1, and specific surface area thereof was measured by the same method as that in Example 1. In addition, the average value of ratios was calculated by the same method as that in Example 1, each of the ratios being a ratio (length of major axis / length of minor axis) of the length of a major axis of a corresponding one of particles of the ferrite powder for bonded magnet to the length of a minor axis of the corresponding one of the particles, the length of the major axis of the corresponding one of the particles being not less than 1.0 $\mu$m and 0.5 $\mu$m, respectively. Moreover, the compression density of the ferrite powder for bonded magnet, and the coercivity iHc and residual magnetization Br of the pressurized powder body were measured by the same methods as those in Example 1. As a result, the average particle diameter was 1.16 $\mu$m, and the specific surface area was 2.39 m$^2$/g. The average value of the ratios was 1.66 when the length of the major axis of each of the particles was not less than 1.0 $\mu$m, and the average value of the ratios was 1.68 when the length of the major axis of each of the particles was not less than 0.5 $\mu$m. The compression density was 3.42 g/cm$^3$, the coercivity iHc of the pressurized powder body was 3450 Oe, and the residual magnetization Br of the pressurized powder body was 1970 G.

The ferrite powder for bonded magnet was used for producing a bonded magnet by the same method as that in Example 1. The coercivity iHc, residual magnetization Br and maximum energy product $BH_{max}$ of the bonded magnet were measured by the same methods as those in Example 1. As a result, the coercivity iHc was 4230 Oe, the residual magnetization Br was 2776 G, and the maximum energy product $BH_{max}$ was 1.90 MGOe. Furthermore, the melt flow rate MFR during the mixing of the ferrite powder for bonded magnet was obtained by the same method as that in Example 1. As a result, the melt flow rate MFR was 89 g / 10 minutes.

[Comparative Example 4]

After a coarse ferrite powder was produced by the same method as that in Comparative Example 1, except that the firing temperature was changed from 1180 °C to 1200 °C when the coarse ferrite powder was produced, the produced coarse ferrite powder was used for obtaining a ferrite powder for bonded magnet by the same method as that in Comparative Example 1. Furthermore, with respect to the coarse ferrite powder produced in this comparative example, the specific surface area thereof was measured by the same method as that in Example 1, and the average value of ratios was obtained by the same method as that in Example 1, each of the ratios being a ratio (length of major axis / length of minor axis) of the length of a major axis of a corresponding one of particles of the coarse ferrite powder to the length of a minor axis of the corresponding one of the particles, the length of the major axis of the corresponding one of the particles being not less

than 1.0 $\mu$m. As a result, the specific surface area was 1.44 m$^2$/g, and the average value of the ratios was 1.64, each of the ratios being the ratio (length of major axis / length of minor axis) of the length of the major axis of the corresponding one of the particles to the length of the minor axis of the corresponding one of the particles, the length of the major axis of the corresponding one of the particles being not less than 1.0 $\mu$m.

The composition analysis of this ferrite powder for bonded magnet was carried out by the same method as that in Example 1. As a result, the ferrite powder for bonded magnet was detected to contain 0.1 % by weight of $Cr_2O_3$, 0.4 % by weight of MnO, 88.9 % by weight of $Fe_2O_3$, 10.3 % by weight of SrO and 0.2 % by weight of BaO, so that Sr and Fe being the main components of the ferrite powder for bonded magnet were detected. Furthermore, although elements, such as Cr, Mn and Ba, considered to be derived from impurities in the raw materials, were detected, the amount of each of the elements was a very small amount of 0.4 % or less when the elements were converted into oxides. Assuming that the very small amounts (1.0 % by weight or less when the elements were converted into oxides) of the elements were impurities, if the chemical formula of the ferrite powder for bonded magnet was expressed as $SrO \cdot n(Fe_2O_3)$ from the analyzed values of Sr and Fe being the main components, n was calculated to be n = 5.60.

With respect to this ferrite powder for bonded magnet, the average particle diameter thereof was obtained by the same method as that in Example 1, and the specific surface area thereof was measured by the same method as that in Example 1. In addition, the average value of ratios was calculated by the same method as that in Example 1, each of the ratios being a ratio (length of major axis / length of minor axis) of the length of a major axis of a corresponding one of particles of the ferrite powder for bonded magnet to the length of a minor axis of the corresponding one of the particles, the length of the major axis of the corresponding one of the particles being not less than 1.0 $\mu$m and 0.5 $\mu$m, respectively. Moreover, the compression density of the ferrite powder for bonded magnet, and the coercivity iHc and residual magnetization Br of the pressurized powder body were measured by the same methods as those in Example 1. As a result, the average particle diameter was 1.21 $\mu$m, and the specific surface area was 2.25 m$^2$/g. The average value of the ratios was 1.65 when the length of the major axis of each of the particles was not less than 1.0 $\mu$m, and the average value of the ratios was 1.65 when the length of the major axis of each of the particles was not less than 0.5 $\mu$m. The compression density was 3.46 g/cm$^3$, the coercivity iHc of the pressurized powder body was 3290 Oe, and the residual magnetization Br of the pressurized powder body was 1970 G.

The ferrite powder for bonded magnet was used for producing a bonded magnet by the same method as that in Example 1. The coercivity iHc, residual magnetization Br and maximum energy product $BH_{max}$ of the bonded magnet were measured by the same methods as those in Example 1. As a result, the coercivity iHc was 3946 Oe, the residual magnetization Br was 2812 G, and the maximum energy product $BH_{max}$ was 1.95 MGOe. Furthermore, the melt flow rate MFR during the mixing of the ferrite powder for bonded magnet was obtained by the same method as that in Example 1. As a result, the melt flow rate MFR was 75 g / 10 minutes.

[Comparative Example 5]

After a coarse ferrite powder was produced by the same method as that in Comparative Example 1, except that the firing temperature was changed from 1180 °C to 1220 °C when the coarse ferrite powder was produced, the produced coarse ferrite powder was used for obtaining a ferrite powder for bonded magnet by the same method as that in Comparative Example 1. Furthermore, with respect to the coarse ferrite powder produced in this comparative example, the specific surface area thereof was measured by the same method as that in Example 1, and the average value of ratios was obtained by the same method as that in Example 1, each of the ratios being a ratio (length of major axis / length of minor axis) of the length of a major axis of a corresponding one of particles of the coarse ferrite powder to the length of a minor axis of the corresponding one of the particles, the length of the major axis of the corresponding one of the particles being not less than 1.0 $\mu$m. As a result, the specific surface area was 1.02 m$^2$/g, and the average value of the ratios was 1.57, each of the ratios being the ratio (length of major axis / length of minor axis) of the length of the major axis of the corresponding one of the particles to the length of the minor axis of the corresponding one of the particles, the length of the major axis of the corresponding one of the particles being not less than 1.0 $\mu$m.

The composition analysis of this ferrite powder for bonded magnet was carried out by the same method as that in Example 1. As a result, the ferrite powder for bonded magnet was detected to contain 0.1 % by weight of $Cr_2O_3$, 0.3 % by weight of MnO, 89.0 % by weight of $Fe_2O_3$, 10.3 % by weight of SrO and 0.1 % by weight of BaO, so that Sr and Fe being the main components of the ferrite powder for bonded magnet were detected. Furthermore, although elements, such as Cr, Mn and Ba, considered to be derived from impurities in the raw materials, were detected, the amount of each of the elements was a very small amount of 0.3 % or less when the elements were converted into oxides. Assuming that the very small amounts (1.0 % by weight or less when the elements were converted into oxides) of the elements were impurities, if the chemical formula of the ferrite powder for bonded magnet was expressed as $SrO \cdot n(Fe_2O_3)$ from the analyzed values of Sr and Fe being the main components, n was calculated to be n = 5.61.

With respect to this ferrite powder for bonded magnet, the average particle diameter thereof was obtained by the same method as that in Example 1, and specific surface area thereof was measured by the same method as that in Example 1. In addition, the average value of ratios was calculated by the same method as that in Example 1, each of the ratios being a ratio (length of major axis / length of minor axis) of the length of a major axis of a corresponding one of particles of the ferrite powder for bonded magnet to the length of a minor axis of the corresponding one of the particles, the length of the major axis of the corresponding one of the particles being not less than 1.0 $\mu$m and 0.5 $\mu$m, respectively. Moreover, the compression density of the ferrite powder for bonded magnet, and the coercivity iHc and residual magnetization Br of the pressurized powder body were measured by the same methods as those in Example 1. As a result, the average particle diameter was 1.26 $\mu$m, and the specific surface area was 2.17 m$^2$/g. The average value of the ratios was 1.57 when the length of the major axis of each of the particles was not less than 1.0 $\mu$m, and the average value of the ratios was 1.59 when the length of the major axis of each of the particles was not less than 0.5 $\mu$m. The compression density was 3.53 g/cm$^3$, the coercivity iHc of the pressurized powder body was 3110 Oe, and the residual magnetization Br of the pressurized powder body was 1990 G.

The ferrite powder for bonded magnet was used for producing a bonded magnet by the same method as that in Example 1. The coercivity iHc, residual magnetization Br and maximum energy product BH$_{max}$ of the bonded magnet were measured by the same methods as those in Example 1. As a result, the coercivity iHc was 3879 Oe, the residual magnetization Br was 2867 G, and the maximum energy product BH$_{max}$ was 2.03 MGOe. Furthermore, the melt flow rate MFR during the mixing of the ferrite powder for bonded magnet was obtained by the same method as that in Example 1. As a result, the melt flow rate MFR was 115 g / 10 minutes.

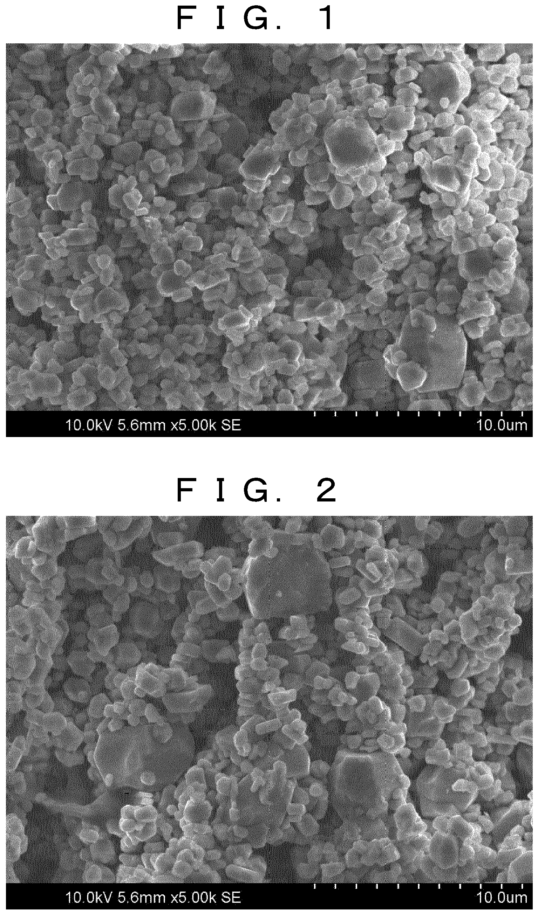

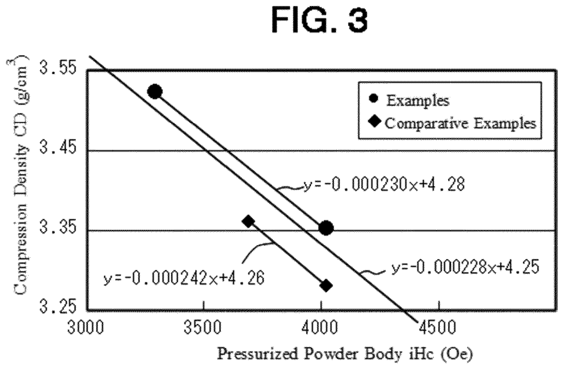

The results of these examples and comparative examples are shown in Tables 1-4, and the scanning electron microscope (SEM) images of the coarse ferrite powders obtained in Example 1 and Comparative Examples 2 are shown in FIGS. 1 and 2, respectively. Furthermore, one of right-lower divisions in FIGS. 1 and 2 shows the length of 1 $\mu$m. The relationship between the compression densities CD and coercivities iHc of the ferrite powders for bonded magnet, which were obtained in examples and comparative examples, are shown in FIG. 3. As shown in FIG. 3, assuming that the coercivity iHc (Oe) of the pressurized powder body of the ferrite powder for bonded magnet is x and that the compression density CD (g/cm$^3$) thereof is y, it can be seen that y = -0.000230x + 4.28 in the ferrite powder for bonded magnet in Examples 1-2, and y = -0.000242x + 4.26 in the ferrite powder for bonded magnet in Comparative Examples 1-2, so that y > -0.000228 + 4.25 is satisfied in the ferrite powder for bonded magnet in Examples 1-2. In addition, y > -0.000228 + 4.25 is also satisfied in the ferrite powder for bonded magnet in Examples 3-5.

[Table 1]

| | | Coarse Powder | | | | | | |
|---|---|---|---|---|---|---|---|---|
| | | Fe Raw Material | Sr Raw Mate-r ia1 | Fe/Sr (Molar Ratio) | Fe (total) /Sr (Molar Ratio) | Firing Temp. (°C) | SSA (m$^2$/g) | Length of Major Axis / Length of Minor Axis |
| | Ex. 1 | $\alpha$-iron oxide (hematite) | Sr-Fe Com-pl ex Oxide | 1.0 | 11.7 | 1210 | 1.47 | 1.55 |
| | Ex.2 | $\alpha$-iron oxide (hematite) | Sr-Fe Com-pl ex Oxide | 1.0 | 11.7 | 1150 | 2.14 | 1.58 |
| | Ex.3 | $\alpha$-iron oxide (hematite) | Sr-Fe Com-pl ex Oxide | 1.0 | 11.7 | 1150 | 2.14 | 1.58 |
| | Ex.4 | $\alpha$-iron oxide (hematite) | Sr-Fe Com-pl ex Oxide | 1.0 | 11.9 | 1175 | 1.72 | 1.58 |
| | Ex.5 | $\alpha$-iron oxide (hematite) | Sr-Fe Com-pl ex Oxide | 1.0 | 11.4 | 1150 | 1.58 | 1.52 |
| | Comp.1 | $\alpha$-iron oxide (hematite) | SrCO$_3$ | - | 11.7 | 1180 | 1.73 | 1.87 |
| | Comp.2 | $\alpha$-iron oxide (hematite) | SrCO$_3$ | - | 11.7 | 1150 | 2.01 | 1.91 |
| | Comp.3 | $\alpha$-iron oxide (hematite) | SrCO$_3$ | - | 11.7 | 1175 | 1.67 | 1.68 |

(continued)

| | | Coarse Powder | | | | | |
|---|---|---|---|---|---|---|---|
| | | Fe Raw Material | Sr Raw Mate-r ia1 | Fe/Sr (Molar Ratio) | Fe (total) /Sr (Molar Ratio) | Firing Temp. (°C) | SSA (m$^2$/g) | Length of Major Axis / Length of Minor Axis |
| Comp.4 | $\alpha$-iron oxide (hematite) | SrCO$_3$ | - | 11.7 | 1200 | 1.44 | 1.64 |
| Comp.5 | $\alpha$-iron oxide (hematite) | SrCO$_3$ | - | 11.7 | 1220 | 1.02 | 1.57 |

[Table 2]

| | Fine Powder | | | | |
|---|---|---|---|---|---|
| | Fe Raw Material | Sr Raw Material | Fe/Sr (Molar Ratio) | Firing Temp. (°C) | SSA (m$^2$/g) |
| Ex. 1 | $\alpha$-iron oxide (hematite) | SrCO$_3$ | 11.0 | 970 | 7.0 |
| Ex.2 | $\alpha$-iron oxide (hematite) | SrCO$_3$ | 11.0 | 970 | 7.0 |
| Ex.3 | $\alpha$-iron oxide (hematite) | SrCO$_3$ | 11.0 | 970 | 7.0 |
| Ex.4 | $\alpha$-iron oxide (hematite) | SrCO$_3$ | 11.0 | 970 | 7.0 |
| Ex.5 | $\alpha$-iron oxide (hematite) | SrCO$_3$ | 11.0 | 970 | 7.0 |
| Comp. 1 | $\alpha$-iron oxide (hematite) | SrCO$_3$ | 11.0 | 970 | 7.0 |
| Comp.2 | $\alpha$-iron oxide (hematite) | SrCO$_3$ | 11.0 | 970 | 7.0 |
| Comp.3 | $\alpha$-iron oxide (hematite) | SrCO$_3$ | 11.0 | 970 | 7.0 |
| Comp.4 | $\alpha$-iron oxide (hematite) | SrCO$_3$ | 11.0 | 970 | 7.0 |
| Comp.5 | $\alpha$-iron oxide (hematite) | SrCO$_3$ | 11.0 | 970 | 7.0 |

[Table 3]

| | Coarse Powder / Fine Powder (Weight Ratio) | An-ne al-ing Temp. (°C) | Ferrite Powder for Bonded Magnet | | | | | | |
|---|---|---|---|---|---|---|---|---|---|
| | | | Average Part-i cle Diameter ($\mu$m) | SSA (m$^2$/g) | Length of Major Axis / Length of Minor Axis | | Compres-s ion Den-s ity CD (g/ cm$^3$) | iHc (Oe) | Br (G) |
| | | | | | 1.0 $\mu$m or more | 0.5 $\mu$m or more | | | |
| Ex. 1 | 70/30 | 980 | 1.21 | 2.37 | 1.53 | 1.54 | 3.52 | 3290 | 1990 |
| Ex.2 | 70/30 | 980 | 1.10 | 2.60 | 1.57 | 1.57 | 3.35 | 4030 | 1900 |
| Ex.3 | 70/30 | 950 | 1.11 | 2.52 | 1.55 | 1.58 | 3.39 | 3950 | 1870 |
| Ex.4 | 70/30 | 980 | 1.12 | 2.54 | 1.59 | 1.55 | 3.43 | 3720 | 1920 |
| Ex.5 | 70/30 | 980 | 1.20 | 2.41 | 1.52 | 1.52 | 3.48 | 3450 | 1970 |
| Comp. 1 | 70/30 | 980 | 1.15 | 2.69 | 1.92 | 1.87 | 3.36 | 3700 | 1870 |
| Comp. 2 | 70/30 | 980 | 1.11 | 2.55 | 1.87 | 1.89 | 3.28 | 4030 | 1840 |
| Comp. 3 | 70/30 | 980 | 1.16 | 2.39 | 1.66 | 1.68 | 3.42 | 3450 | 1970 |
| Comp. 4 | 70/30 | 980 | 1.21 | 2.25 | 1.65 | 1.65 | 3.46 | 3290 | 1970 |
| Comp. 5 | 70/30 | 980 | 1.26 | 2.17 | 1.57 | 1.59 | 3.53 | 3110 | 1990 |

[Table 4]

| | Melt Flow Rate MFR (g/10min.) | Characteristics of Bonded Magnet | | |
|---|---|---|---|---|
| | | iHc (Oe) | Br (G) | BHmax (MGOe) |
| Ex. 1 | 90 | 4093 | 2871 | 2.03 |
| Ex.2 | 84 | 4842 | 2808 | 1.93 |
| Ex.3 | 88 | 4868 | 2840 | 1.97 |
| Ex.4 | 88 | 4458 | 2844 | 1.98 |
| Ex.5 | 102 | 4061 | 2863 | 2.02 |
| Comp. 1 | 74 | 4461 | 2767 | 1.87 |
| Comp.2 | 58 | 4625 | 2736 | 1.83 |
| Comp.5 | 89 | 4230 | 2776 | 1.90 |
| Comp.4 | 73 | 3946 | 2812 | 1.95 |
| Comp.5 | 115 | 3879 | 2867 | 2.03 |

## Claims

1. A method for producing a ferrite powder for bonded magnet, the method comprising the steps of:
mixing a coarse ferrite powder with a fine ferrite powder having a larger specific surface area than that of the coarse ferrite powder to obtain a mixed ferrite powder; and annealing the mixed ferrite powder,
**characterized in that**:
the coarse ferrite powder is produced by a method comprising the steps of:

mixing a complex oxide of iron and strontium, iron oxide, and a flux to obtain a mixture;
granulating the mixture to obtain a granulated mixture;
firing the granulated mixture to obtain a fired substance; and
coarsely pulverizing the fired substance to obtain a coarse ferrite powder.

2. A method for producing a ferrite powder for bonded magnet as set forth in claim 1, wherein said complex oxide is produced by firing a granulated substance which is obtained by mixing and granulating $\alpha$ -$Fe_2O_3$ and strontium carbonate so that a molar ratio of Fe to Sr is in the range of from 0.5 to 2.5.

3. A method for producing a ferrite powder for bonded magnet as set forth in claim 1, wherein an average value of ratios is not greater than 1.60, each of the ratios being a ratio of a length of a major axis of a corresponding one of particles of the ferrite powder for bonded magnet to a length of a minor axis of the corresponding one of the particles, the length of the major axis of the corresponding one of the particles being 1.0 $\mu$ m or more.

4. A method for producing a ferrite powder for bonded magnet as set forth in claim 1, wherein an average value of ratios is not greater than 1.60, each of the ratios being a ratio of a length of a major axis of a corresponding one of particles of the ferrite powder for bonded magnet to a length of a minor axis of the corresponding one of the particles, the length of the major axis of the corresponding one of the particles being 0.5 $\mu$ m or more.

## Patentansprüche

1. Verfahren zur Herstellung eines Ferrit-Pulvers für einen gebundenen Magnet, wobei das Verfahren die Schritte umfasst:
Vermischen eines groben Ferrit-Pulvers mit einem feinen Ferrit-Pulver, das eine größere spezifische Oberfläche aufweist als diejenige des groben Ferrit-Pulvers, um ein gemischtes Ferrit-Pulver zu erhalten; und Glühen des gemischten Ferrit-Pulvers,
**dadurch gekennzeichnet, dass**:
das grobe Ferrit-Pulver durch ein Verfahren hergestellt wird, das die Schritte umfasst:

Vermischen eines komplexen Oxids von Eisen und Strontium, von Eisenoxid und eines Flussmittels, um ein Gemisch zu erhalten;

Granulieren des Gemisches, um ein granuliertes Gemisch zu erhalten;

Brennen des granulierten Gemisches, um eine gebrannte Substanz zu erhalten; und

grobes Pulverisieren der gebrannten Substanz, um ein grobes Ferrit-Pulver zu erhalten.

2. Verfahren zur Herstellung eines Ferrit-Pulvers für einen gebundenen Magnet nach Anspruch 1, wobei das komplexe Oxid hergestellt wird, indem eine granulierte Substanz gebrannt wird, die erhalten wird, indem $\alpha$-Fe$_2$O$_3$ und Strontiumcarbonat so vermischt und granuliert werden, dass ein Molverhältnis von Fe zu Sr im Bereich von 0,5 bis 2,5 liegt.

3. Verfahren zur Herstellung eines Ferrit-Pulvers für einen gebundenen Magnet nach Anspruch 1, wobei ein Mittelwert von Verhältnissen nicht größer als 1,60 ist, wobei jedes der Verhältnisse ein Verhältnis einer Länge einer Hauptachse eines entsprechenden von Partikeln des Ferrit-Pulvers für einen gebundenen Magnet zu einer Länge einer Nebenachse des entsprechenden der Partikel ist, wobei die Länge der Hauptachse des entsprechenden der Partikel 1,0 $\mu$m oder mehr beträgt.

4. Verfahren zur Herstellung eines Ferrit-Pulvers für einen gebundenen Magnet nach Anspruch 1, wobei ein Mittelwert von Verhältnissen nicht größer als 1,60 ist, wobei jedes der Verhältnisse ein Verhältnis einer Länge einer Hauptachse eines entsprechenden von Partikeln des Ferrit-Pulvers für einen gebundenen Magnet zu einer Länge einer Nebenachse des entsprechenden der Partikel ist, wobei die Länge der Hauptachse des entsprechenden der Partikel 0,5 $\mu$m oder mehr beträgt.

**Revendications**

1. Procédé de production d'une poudre de ferrite destinée à un aimant lié, le procédé comprenant les étapes consistant à :

mélanger une poudre de ferrite grossière avec une poudre de ferrite fine ayant une superficie spécifique supérieure à celle de la poudre de ferrite grossière pour obtenir une poudre de ferrite mélangée ; et recuire la poudre de ferrite mélangée,
**caractérisé en ce que** :
la poudre de ferrite grossière est produite via un procédé comprenant les étapes consistant à :

mélanger un oxyde complexe de fer et de strontium, un oxyde de fer, et un flux pour obtenir un mélange ;
granuler le mélange pour obtenir un mélange granulé ;
cuire le mélange granulé pour obtenir une substance cuite ; et
pulvériser grossièrement la substance cuite pour obtenir une poudre de ferrite grossière.

2. Procédé de production d'une poudre de ferrite destinée à un aimant lié selon la revendication 1, dans lequel ledit oxyde complexe est produit en cuisant une substance granulée qui est obtenue en mélangeant et en granulant $\alpha$ - Fe$_2$O$_3$ et un carbonate de strontium de telle sorte qu'un rapport molaire de Fe sur Sr est dans la plage allant de 0,5 à 2,5.

3. Procédé de production d'une poudre de ferrite destinée à un aimant lié selon la revendication 1, dans lequel une valeur moyenne de rapports n'est pas supérieure à 1,60, chacun des rapports étant un rapport d'une longueur d'un axe majeur d'une particule correspondante parmi des particules de la poudre de ferrite destinée à un aimant lié, sur une longueur d'un axe mineur de la particule correspondante parmi les particules, la longueur de l'axe majeur de la particule correspondante parmi les particules étant de 1,0 $\mu$m ou plus.

4. Procédé de production d'une poudre de ferrite destinée à un aimant lié selon la revendication 1, dans lequel une valeur moyenne de rapports n'est pas supérieure à 1,60, chacun des rapports étant un rapport d'une longueur d'un axe majeur d'une particule correspondante parmi des particules de la poudre de ferrite destinée à un aimant lié, sur une longueur d'un axe mineur de la particule correspondante parmi les particules, la longueur de l'axe majeur de la particule correspondante parmi les particules étant de 0,5 $\mu$m ou plus.

# F I G. 1

10.0kV 5.6mm x5.00k SE                    10.0um

# F I G. 2

10.0kV 5.6mm x5.00k SE                    10.0um

# FIG. 3

**EP 3 696 828 B1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2016072636 A
- JP 2016136701 A
- JP 2016157939 A